# EUROPEAN PATENT APPLICATION

(11) **EP 4 455 090 A1**
(43) Date of publication of application: **30.10.2024**
(21) Application number: 22909630.0
(22) Date of filing: 22.11.2022
(51) Int. Cl.: C01B 39/08, C01B 37/00, B01J 29/89

(54) **TITANIUM SILICATE MOLECULAR SIEVE, AND NANO-GOLD-LOADED TITANIUM SILICATE MOLECULAR SIEVE CATALYST AND PREPARATION METHOD THEREFOR AND USE THEREOF**

(30) Priority: 22.12.2021 CN 202111579941; 22.12.2021 CN 202111579946; 11.03.2022 CN 202210239081
(71) Applicant: China Petroleum & Chemical Corporation, Beijing 100728 (CN); Sinopec Research Institute of Safety Engineering Co., Ltd., Qingdao, Shandong 266104 (CN)
(72) Inventor: LIU, Yujia, Qingdao, Shandong 266104 (CN); ZHAO, Chenyang, Qingdao, Shandong 266104 (CN); ZHU, Hongwei, Qingdao, Shandong 266104 (CN); SUN, Bing, Qingdao, Shandong 266104 (CN); SHI, Ning, Qingdao, Shandong 266104 (CN); XU, Wei, Qingdao, Shandong 266104 (CN)
(74) Representative: karo IP
(86) International application number: PCT/CN2022/133454
(87) International publication number: WO 2023/116315

(57) **Abstract**

Provided are a titanium silicate molecular sieve, a nano-gold-loaded titanium silicate molecular sieve catalyst, and a preparation method for and the use of the catalyst. The titanium silicate molecular sieve has a micropore specific surface area of 320-500 m²/g, a micropore volume of 0.1-0.4 cm³/g, a mesopore specific surface area of 50-100 m²/g, a mesopore volume of 0.075-0.1 cm³/g, and a particle size of 100-250 nm, wherein the micropore specific surface area accounts for 50-90% of the total specific surface area. The catalyst comprises a titanium silicate molecular sieve carrier and loaded nano-gold, and the catalyst has a micropore volume of 0.06-0.4 cm³/g, a micropore specific surface area of 160-450 m²/g, a mesopore volume of 0.05-0.08 cm³/g, a mesopore specific surface area of 40-85 m²/g, and a particle size of 100-250 nm. The preparation method for the catalyst comprises the steps of subjecting a titanium silicate molecular sieve to an alkaline treatment with an aqueous aliphatic amine solution and then loading same with nano-gold particles. The catalyst is used for an olefin epoxidation reaction, a cycloolefin epoxidation reaction, a phenol hydroxylation reaction, and a cyclohexanone ammoximation reaction. By loading nano-gold particles onto a titanium silicate molecular sieve with specific physical property parameters, the high dispersity of nano-gold is achieved; and when the resulting catalyst is used for the gas-phase epoxidation reaction of propylene, a high catalytic activity is obtained, the conversion rate of propylene is increased to 8%-14%, and the selectivity of epoxypropane is increased to 90-99%.

## Description

### CROSS-REFERENCE TO RELATED APPLICATIONS

The present application claims the benefit of Chinese patent application No. "202111579941.1", filed on December 22, 2021, the content of which is entirely incorporated herein by reference.

The present application claims the benefit of Chinese patent application No. "202111579946.4", filed on December 22, 2021, the content of which is entirely incorporated herein by reference.

The present application claims the benefit of Chinese patent application No. "202210239081.5", filed on March 11, 2022, the content of which is entirely incorporated herein by reference.

### TECHNICAL FIELD

The invention relates to the field of the hydro-oxidation reaction, and in particular to a titanium silicalite molecular sieve, a catalyst of nanogold-supported titanium silicalite molecular sieve, and a preparation method therefor, and use thereof.

### BACKGROUND ART

Heteroatom molecular sieves have a regular topological structure, and the introduction of framework metal atoms provides them with unique acidic properties, thus the heteroatom molecular sieves have emerged as the research hotspot in the chemical and chemical industries. In 1983, Taramasso et al first reported the TS-1 molecular sieve, wherein the transition metal titanium atoms replaced a small amount of framework silicon atoms of the all-silicon MFI structure molecular sieve, i.e., the titanium atoms were embedded in the tetra-coordinate form into the framework position of the molecular sieve. Since the framework titanium species have Lewis acidity, the empty orbits of which can accept the extra-nuclear electrons of the oxygen atoms in the H₂O₂ molecule, the TS-1 molecular sieves can efficiently activate the H₂O₂ molecule and organics of different functional groups to carry out the selective oxidation reaction, such as an olefin epoxidation reaction, a cycloolefin epoxidation reaction, a phenol hydroxylation reaction, and a cyclohexanone ammoximation reaction. When compared with the conventional oxidation process, the H₂O₂/TS-1 catalytic oxidation process has advantages such as mild reaction conditions, a clean and efficient reaction process.

Currently, several sets of industrial application devices of H₂O₂/TS-1 catalytic oxidation systems have been put into use, such as propylene epoxidation (HPPO) and cyclohexanone ammoximation. Although the catalytic system has many advantages because the catalytic system requires the accompanying hydrogen peroxide production device, its promotion still confronts with problems: the storage and transportation conditions of hydrogen peroxide are harsh, and the on-site production device of hydrogen peroxide is necessary, which impose a limitation to the process layout; in addition, the high concentration of hydrogen peroxide suffers from difficulties in the preparation process and potential safety hazard during the storage process. In order to fundamentally eradicate the limitation, the researchers are considering the possibility of catalyzing the organics to carry out the selective oxidation reaction directly under the hydrogen (H₂) and oxygen (O₂) gas atmosphere. The gas-phase selective oxidation technology provides more flexibility in the industrial layout and also satisfies the development requirements for clean, efficient, green, and low-carbon.

In order to achieve hydro-oxidation, there is a need for catalyst improvements that can simultaneously complete the in-situ synthesis of H₂O₂ from hydrogen and oxygen and the oxidation reaction of organics.

### SUMMARY OF THE INVENTION

The invention aims to overcome the problem in the prior art about controlling the low micropore volume and micropore specific surface area of TS-1 molecular sieve carrier and the dispersity of its loaded metal nanoparticles, and provides a titanium silicalite molecular sieve and a preparation method therefor, and a catalyst of nanogold-supported titanium silicalite molecular sieve and a preparation method therefor and a use thereof.

In order to fulfill the above purposes, the first aspect of the invention provides a titanium silicalite molecular sieve, wherein the titanium silicalite molecular sieve has a micropore specific surface area of 320-500 m²/g, a micropore volume of 0.1-0.4 cm³/g, a mesopore specific surface area of 50-100 m²/g, a mesopore volume of 0.075-0.1 cm³/g, and a particle size of 100-250nm, the micropore specific surface area accounts for 50-90% of the total specific surface area.

The second aspect of the invention provides a nanogold-supported titanium silicalite molecular sieve catalyst, wherein the catalyst comprises a carrier of titanium silicalite molecular sieve and a nano-gold supported on the carrier; wherein the catalyst has a micropore volume of 0.06-0.4 cm³/g, a micropore specific surface area of 160-450 m²/g, a mesopore volume of 0.05-0.08 cm³/g, a mesopore specific surface area of 40-85 m²/g, and a particle size of 100-250nm.

The third aspect of the invention provides a method for preparing a catalyst of nanogold-supported titanium silicalite molecular sieve catalyst, the method comprises steps of subjecting a titanium silicalite molecular sieve to an alkaline treatment with an aqueous aliphatic amine solution and then the nano-gold particles are supported on the treated titanium silicalite molecular sieve to obtain the catalyst;

Wherein the titanium silicalite molecular sieve is the titanium silicalite molecular sieve according to the first aspect.

In the fourth aspect, the invention provides a catalyst of nanogold-supported titanium silicalite molecular sieve produced by the method according to the third aspect.

In the fifth aspect, the invention provides a use of a catalyst of nanogold-supported titanium substrate molecular sieve according to the second and fourth aspects in an olefin epoxidation reaction, a cycloolefin epoxidation reaction, a phenol hydroxylation reaction, and a cyclohexanone ammoximation reaction.

Due to the aforementioned technical scheme, the high dispersity of nano-gold of the nanogold-supported titanium silicalite molecular sieve is achieved in the invention by supporting nano-gold particles onto a titanium silicalite molecular sieve with specific physical property parameters; when the resulting catalyst is used for the gas-phase epoxidation reaction of propylene, a high catalytic activity is obtained, the conversion rate of propylene is increased to 8%-14%, and the selectivity of epoxypropane is increased to 90-99%.

### BRIEF DESCRIPTION OF THE DRAWINGS

FIG. 1 illustrates a reaction path diagram for the gas-phase epoxidation of propylene in the invention.
FIG. 2 is a graph showing the pore size distribution of the micropores of titanium silicalite molecular sieve prepared in Preparation Example 1 and Preparation Example 7 of the invention;
FIG. 3 is a graph showing the pore size distributions of titanium silicalite molecular sieves prepared in Preparation Example 1 and Preparation Example 8 of the invention;
FIG. 4 illustrates a HAADF-STEM image of the catalyst obtained in Example 3 of the invention;
FIG. 5 illustrates a HAADF-STEM image of the catalyst obtained in Comparative Example 5 of the invention.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed have been specifically disclosed herein.

In the first aspect, the invention provides a titanium silicalite molecular sieve, the titanium silicalite molecular sieve has a micropore specific surface area of 320-500 m²/g, a micropore volume of 0.1-0.4 cm³/g, a mesopore specific surface area of 50-100 m²/g, a mesopore volume of 0.075-0.1 cm³/g, and a particle size of 100-250nm, the micropore specific surface area accounts for 50-90% of the total specific surface area.

In the invention, micropore refers to the pore having a pore size of less than 2nm in the porous structure of the titanium silicalite molecular sieve.

In the invention, the micropore specific surface area and micropore volume of the titanium silicalite molecular sieve are determined by analyzing and calculating with the t-plot method after measuring the static N₂ adsorption-desorption curve of the sample by using a static nitrogen adsorption instrument with a model Micro meritics ASAP 2460 under the liquid nitrogen temperature.

In the invention, the mesopore specific surface area and mesopore volume of the titanium silicalite molecular sieve are determined by analyzing and calculating with the BJH method after measuring the static N₂ adsorption-desorption curve of the sample by using a static nitrogen adsorption instrument with a model Micro meritics ASAP 2460 under the liquid nitrogen temperature.

In the invention, the total specific surface area of the titanium silicalite molecular sieve is measured with the BET method.

In the invention, the particle size of the titanium silicalite molecular sieve is observed and measured by the High Angle Annular Dark Field Scanning Transmission Electron Microscopy (HAADF-STEM).

The micropore specific surface area of the titanium silicalite molecular sieve may be selected from 320m²/g, 350m²/g, 400m²/g, 405m²/g, 410m²/g, 445m²/g, 480m²/g, 500m²/g, and an arbitrary value within the range consisting of any two of the aforementioned numerical values.

The micropore volume of the titanium silicalite molecular sieve may be selected from 0.1cm³/g, 0.15cm³/g, 0.165cm³/g, 0.2cm³/g, 0.238cm³/g, 0.3cm³/g, 0.0.355cm³/g, 0.389cm³/g, 0.4cm³/g, and an arbitrary value within the range consisting of any two of the aforementioned numerical values.

The mesopore specific surface area of the titanium silicalite molecular sieve may be selected from 50m²/g, 60m²/g, 72m²/g, 80m²/g, 90m²/g, 95m²/g, 100m²/g, and an arbitrary value within the range consisting of any two of the aforementioned numerical values.

The mesopore volume of the titanium silicalite molecular sieve may be selected from 0.075cm³/g, 0.085cm³/g, 0.09cm³/g, 0.095cm³/g, 0.1cm³/g, and an arbitrary value within the range consisting of any two of the aforementioned numerical values.

The particle size of the titanium silicalite molecular sieve may be selected from 100nm, 125nm, 140nm, 158nm, 180nm, 200nm, 215nm, 230nm, 245nm, 250nm, and an arbitrary value within the range consisting of any two of the aforementioned numerical values.

The ratio of micropore specific surface area of the titanium silicalite molecule sieve to the total specific surface area may be selected from 50%, 60%, 70%, 80%, 90%, and an arbitrary value within the range consisting of any two of the aforementioned numerical values.

In a preferred embodiment of the invention, the titanium silicalite molecular sieve has a micropore specific surface area of 350-480 m²/g, a micropore volume of 0.13-0.37 cm³/g, a mesopore specific surface area of 70-100 m²/g, a mesopore volume of 0.08-0.1 cm³/g, and a particle size of 150-210nm, the micropore specific surface area accounts for 60-90% of the total specific surface area.

In a preferred embodiment of the invention, the titanium silicalite molecular sieve satisfies: 130% < surface Ti/Si (mol%) / bulk phase Ti/Si (mol%) ×100% < 220%.

In the invention, the titanium content and the silicon content on the surface of the titanium silicalite molecular sieve are measured by using the X-ray Photoelectron Spectroscopy (XPS), a surface Ti/Si (mol%) of the sample is obtained by comparing the molar weight of titanium and silicon; the titanium content and silicon content of the bulk phase of the titanium silicalite molecular sieve are measured by using the X-ray Fluorescence Spectroscopy (XRF), a bulk phase Ti/Si (mol%) of the sample is obtained by comparing the molar weight of titanium and silicon; wherein the surface refers to a layer of surface on the titanium silicalite molecular sieve particles that is detectable by XPS, its theoretical depth is within the range of 8-10nm, and the bulk phase refers to the entirety of the titanium silicalite molecular sieve particles.

In a preferred embodiment of the invention, the titanium silicalite molecular sieve satisfies: 145% < surface Ti/Si (mol%) / bulk phase Ti/Si (mol%) ×100% < 200%.

In a preferred embodiment of the invention, the molar ratio of titanium and silicon in the titanium silicalite molecular sieve is of 0.001-0.04: 1, preferably 0.005-0.025: 1.

According to the invention, the preparation method of the titanium silicalite molecular sieve comprises the following steps:
(1) Mixing a silicon source, an alkaline template agent, a titanium source, water, and an alcohol compound uniformly to obtain a titanium silica sol;
(2) Adding the compound represented by formula (I) into the titanium silica sol, and subjecting the resultant mixture to hydrothermal crystallization and calcination to obtain a titanium silicalite molecular sieve;

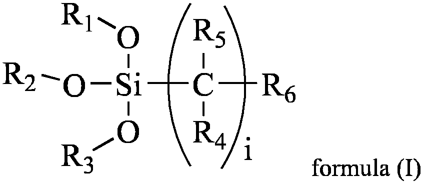

Wherein i is an integer from 1 to 6; R₁, R₂, and R₃ are each independently selected from C₁-C₆ alkyl; R₄ and R₅ are each independently selected from hydrogen, methyl, and ethyl; R₆ is selected from methyl, -SH, -NHR₇; R₇ is selected from hydrogen or C₁-C₆ alkyl.

In the invention, C₁-C₆ alkyl refers to the alkyl group having a total number of 1-6 carbon atoms, and for example, it may be one of methyl, ethyl, n-propyl, isopropyl, n-butyl, isobutyl, tert-butyl, n-pentyl, and n-hexyl.

In some preferred embodiments of the invention, R₁, R₂, and R₃ are each independently selected from C₁-C₃ alkyl, which may be methyl, ethyl, n-propyl, or isopropyl, preferably R₁, R₂, and R₃ are each independently selected from methyl, ethyl or n-propyl. In the invention, R₁ R₂, and R₃ may be the same or different, R₁, R₂, and R₃ are preferably the same.

In the invention, when a compound represented by formula (I) is used as a silylating reagent, a titanium silicalite molecular sieve having a micropore structure can be formed during the hydrothermal crystallization reaction process, and the titanium silicalite molecular sieve has a high amount of micropore, which is represented by a high micropore specific surface area and micropore volume, and a high surface titanium content (represented by a high ratio of surface Ti/Si / bulk phase Ti/Si), when it is used as a catalyst or a catalyst carrier and applied in the reaction, compared with the titanium silicalite molecular sieve having mesopore channels, the domain-limited space created by the micropore channels is more favorable for collision of reactant molecules with active centers of framework titanium on the pore walls, thereby adsorbing and performing the chemical reaction, and increasing conversion rate of the reactants; secondly, the increased secondary micropore structure can provide the abundant mass transfer channels to shorten the molecular diffusion paths, increase diffusion rates of the reactants and product molecules, facilitate the timely desorption of product molecules to avoid side reactions, and enhance selectivity; the characteristic of high surface titanium content also causes that the diffusion paths of the reactants and product molecules are significantly shortened, while improving the contact efficiency of reactant with active centers and enhancing the desorption and external diffusion effects of the product molecules, thereby further enhancing the reactant conversion rate and product selectivity.

In the invention, when R₆ of the compound represented by formula (I) is methyl, it forms a titanium silicalite molecular sieve with a secondary micropore structure during the hydrothermal crystallization reaction process through weak intermolecular interaction force between alkyl chains of the silylating reagent; when R₆ of the compound represented by formula (I) is -SH, it forms a titanium silicalite molecular sieve with a secondary micropore structure during the hydrothermal crystallization reaction process through the electrostatic interaction force between the thiol groups of silylating reagent; when R₆ of the compound represented by formula (1) is -NHR₇, it forms the titanium silicalite molecular sieve with a secondary micropore structure during the hydrothermal crystallization reaction process through the hydrogen bond acting force between amino groups of silylating reagent and the flexible acting force of amino-linked outer terminal single chain alkyl (R₇). The secondary micropore structure refers to the supplemented micropore structure obtained due to the addition of a silylating reagent, in addition to the intrinsic micropore of the titanium silicalite molecular sieve.

According to the invention, if the used amount of a silylating reagent (compound represented by formula (I)) is excessively high, it will lead to that the crystallization property of titanium silica sol is deteriorated and the molecular sieve can not be obtained, if the used amount of the silylating reagent (compound represented by formula (I)) is too low, it will decrease the micropore specific surface area and micropore volume of the obtained titanium silica molecular sieve, affect the mass transfer efficiency, thus its catalytic activity is influenced. Preferably, in step (1), the silicon source is calculated in terms of SiO₂, the alkaline template agent is calculated in terms of N when it contains nitrogen element, the alkaline template agent is calculated in terms of OH⁻ when it does not contain nitrogen element, and the titanium source is calculated in terms of TiO₂, the molar ratio of the silicon source, the alkaline template agent, the titanium source, water, alcohol compound, and the compound represented by formula (I) is 1: (0.05-0.4): (0.001-0.04): (5-40): (0.1-10): (0.01-0.3); preferably 1: (0.1-0.3): (0.005-0.025): (5-25): (0.1-5): (0.01-0.2).

In a preferred embodiment of the invention, the silicon source is at least one selected from the group consisting of tetramethyl silicate, tetraethyl silicate, tetrapropyl silicate, tetrabutyl silicate, white carbon black, and silica sol.

In a preferred embodiment of the invention, the alkaline template agent is at least one selected from the group consisting of quaternary ammonium base, aliphatic amine, and aliphatic alcohol amine, preferably at least one selected from the group consisting of tetramethyl ammonium hydroxide, tetraethyl ammonium hydroxide, tetrapropyl ammonium hydroxide, and tetrabutyl ammonium hydroxide.

In a preferred embodiment of the invention, the titanium source is selected from an organic titanium source and/or an inorganic titanium source.

In a preferred embodiment of the invention, the titanium source is at least one selected from the group consisting of titanium tetrachloride, titanium sulfate, titanium nitrate, tetraethyl titanate, tetrapropyl titanate, and tetrabutyl titanate.

In a preferred embodiment of the invention, the alcohol compound is C₁-C₄ alcohol, preferably isopropanol.

According to the invention, it is preferable that step (1) further comprises the following operations: subjecting the silicon source, the alkaline template agent, and water to a first stirring and mixing to obtain a mixed system, then dropwise adding a mixed liquor of the titanium source and the alcohol compound into the mixed system and subjecting to a second stirring, to obtain a mixed solution.

In the invention, the dropwise addition rate of the mixed liquor is preferably within the range of 0.01-0.5mL/min, and more preferably within the range of 0.1-0.5mL/min.

In the invention, the first stirring time is preferably 0.1-2h.

In the invention, the second stirring time is preferably 0.5-6h, more preferably 0.5-3h.

In the invention, it is preferable that step (1) further comprises the following operations: subjecting the mixed solution to alcohol removal; which can remove the alcohol produced by hydrolysis of the silicon source and titanium source, the invention preferably uses an azeotropic distillation process to remove the alcohol produced in the system, and the loss of water from azeotropic distillation is simultaneously supplemented in the alcohol removal process to ensure that the proportions of materials in the titanium silica sol can meet the above requirements; and preferably, the alcohol removal conditions comprise: a temperature of 30-100°C and a time of 2-10 hours; preferably a temperature of 40-90°C and a time of 4-10 hours.

According to the invention, in order to uniformly disperse the silylating reagent in the titanium silica sol, it is preferable that step (2) further comprises the following operations: adding the compound represented by formula (I) into the titanium silica sol and performing a third stirring for 0.1-24h, the third stirring time is preferably 0.5-10h, more preferably 1-3h.

In the invention, the nucleation and growth rate of molecular sieves in a low-temperature state can be controlled by a rapid temperature rise, so as to obtain the molecular sieve particles with a small particle size, when the molecular sieve particles are loaded with nano-gold and subsequently applied in a catalytic reaction, the molecular sieve particles can shorten the inter-diffusion path of product molecules, which is conducive to improving selectivity; in addition, a rapid temperature rise process enables rapid hydrolysis of the silylating reagent during the molecular sieve growth process to construct the secondary micropore structure. According to the invention, the hydrothermal crystallization process in step (2) preferably comprises: heating the mixture to the crystallization temperature in a time of 0.1-1h, and subsequently subjecting the mixture to crystallization at a crystallization temperature of 50-200°C for 10-100h; preferably, subjecting the mixture to crystallization at a crystallization temperature of 100-200°C for 20-80h; further preferably, the temperature rise time is 0.1-0.5h; more preferably, the hydrothermal crystallization condition comprises: a temperature of 120-180°C and a time of 20-80h; under the preferred conditions, the micropore specific surface area and micropore volume of the molecular sieve can be balanced; such that a molecular sieve having a particular micropore specific surface area and micropore volume is prepared.

The invention does not impose a particular limitation to the pressure of hydrothermal crystallization, which may be an autogenous pressure of the crystallization system.

According to the invention, it is preferred that the method further comprises the following steps: washing, filtering, and drying the product obtained by hydrothermal crystallization; wherein the washing, filtering, and drying processes may be respectively known among those skilled in the art. Exemplarily, the washing temperature may be 20-50°C, the washing solvent may be water, and the used amount of said washing solvent is 1-20 times the mass of the crystallization product; the drying condition may comprise: a temperature of 40-150°C, and a time of 0.5-24h.

In a preferred embodiment of the invention, the conditions of calcination in step (2) comprise a temperature of 400-800°C, and a time of 1-15h.

The second aspect of the invention provides a catalyst of nanogold-supported titanium silicalite molecular sieve, wherein the catalyst comprises a carrier of titanium silicalite molecular sieve and a nano-gold supported on the carrier; wherein the catalyst has a micropore volume of 0.06-0.4 cm³/g, a micropore specific surface area of 160-450 m²/g, a mesopore volume of 0.05-0.08 cm³/g, a mesopore specific surface area of 40-85 m²/g, and a particle size of 100-250nm.

In the invention, the micropore specific surface area and micropore volume of the catalyst are determined by analyzing and calculating with the t-plot method after measuring the static N₂ adsorption-desorption curve of the sample by using a static nitrogen adsorption instrument with a model Micro meritics ASAP 2460 under the liquid nitrogen temperature.

In the invention, the mesopore specific surface area and mesopore volume of the catalyst are determined by analyzing and calculating with the BJH method after measuring the static N₂ adsorption-desorption curve of the sample by using a static nitrogen adsorption instrument with a model Micro meritics ASAP 2460 under the liquid nitrogen temperature.

In the invention, the particle size of the catalyst is observed and measured by the High Angle Annular Dark Field Scanning Transmission Electron Microscopy (HAADF-STEM).

The micropore volume of the catalyst may be selected from 0.06cm³/g, 0.1cm³/g, 0.15cm³/g, 0.2cm³/g, 0.25cm³/g, 0.3cm³/g, 0.35cm³/g, 0.4cm³/g, and an arbitrary value within the range consisting of any two of the aforementioned numerical values.

The micropore specific surface area of the catalyst may be selected from 160m²/g, 200m²/g, 250m²/g, 280m²/g, 300m²/g, 320m²/g, 360m²/g, 400m²/g, 420m²/g, 450m²/g, and an arbitrary value within the range consisting of any two of the aforementioned numerical values.

The mesopore volume of the catalyst may be selected from 0.05cm³/g, 0.06cm³/g, 0.07cm³/g, 0.08cm³/g, and an arbitrary value within the range consisting of any two of the aforementioned numerical values.

The mesopore specific surface area of the catalyst may be selected from 40m²/g, 50m²/g, 60m²/g, 70m²/g, 75m²/g, 80m²/g, 85m²/g, and an arbitrary value within the range consisting of any two of the aforementioned numerical values.

The particle size of the catalyst may be selected from 100nm, 120nm, 140nm, 150nm, 180nm, 200nm, 220nm, 240nm, 250nm, and an arbitrary value within the range consisting of any two of the aforementioned numerical values.

In a preferred embodiment of the invention, the catalyst has a micropore volume of 0.1-0.3 cm³/g, a micropore specific surface area of 260-410 m²/g, a mesopore volume of 0.058-0.078 cm³/g, a mesopore specific surface area of 45-80 m²/g, and a particle size of 150-210nm.

In a preferred embodiment of the invention, the catalyst satisfies : 130% < surface Ti/Si (mol%) / bulk phase Ti/Si (mol%) ×100% < 220%.

In the invention, the titanium content and the silicon content on the surface of the catalyst are measured by using X-ray Photoelectron Spectroscopy (XPS), a surface Ti/Si (mol%) of the sample is obtained by comparing the molar weight of titanium and silicon; the titanium content and silicon content of the bulk phase of the catalyst are measured by using the X-ray Fluorescence Spectroscopy (XRF), a bulk phase Ti/Si (mol%) of the sample is obtained by comparing the molar weight of titanium and silicon; wherein the surface refers to a layer of surface on the catalyst particles that is detectable by XPS, its theoretical depth is within the range of 8-10nm, and the bulk phase refers to the entirety of the catalyst particles.

In a preferred embodiment of the invention, the catalyst satisfies: 145% < surface Ti/Si (mol%) / bulk phase Ti/Si (mol%) × 100% < 200%.

In a preferred embodiment of the invention, more than 90% of gold in the nano-gold has a valence of zero.

In the invention, the nano-gold valence is measured by using X-ray Photoelectron Spectroscopy (XPS), the measured XPS peak is divided by the software to obtain the small peaks corresponding to the Au valence 0, +1, and +3, respectively, and the content of the valence 0 nano-gold in the nano-gold is obtained by calculating the proportion of the peak area corresponding to the valence 0 to the total peak area.

In a preferred embodiment of the invention, the number difference of nano-gold particles within any region of 50nm*50nm on the catalyst is not more than 30%.

In the invention, the expression "the number difference of nano-gold particles within any region of 50nm*50nm on the catalyst does not more than 30%" refers to that in a HAADF-STEM photograph of a single nanogold-supported titanium silicalite molecular sieve particle, the nanogold-supported titanium silicalite molecular sieve is divided into several (not less than 3) adjacent regions of 50nm*50nm, and the number of nano-gold particles in each region of 50nm*50nm is calculated, wherein the region with the highest number of nano-gold particles is denoted as A1 region, the region with the lowest number of nano-gold particles is denoted as A2 region, (number of nano-gold particles in A1 region - number of nano-gold particles in A2 region)/ number of nano-gold particles in A1 region is less than or equal to 30%.

In a preferred embodiment of the invention, the number of nano-gold particles within any region of 50nm*50nm on the catalyst is within the range of 5-40.

In the invention, the expression "the number of nano-gold particles within any region of 50nm*50nm on the catalyst is within the range of 5-40" refers to that in a HAADF-STEM photograph of a single nanogold-supported titanium silicalite molecular sieve particle, the nanogold-supported titanium silicalite molecular sieve is divided into several (not less than 3) adjacent regions of 50nm*50nm, and the number of nano-gold particles in each region of 50nm*50nm is within the range of 5-40.

In a preferred embodiment of the invention, the particle size of the nano-gold particles is within the range of 0.1-5nm.

In the invention, the particle size of the nano-gold particles is observed and measured by the High Angle Annular Dark Field Scanning Transmission Electron Microscopy (HAADF-STEM); and the number of nano-gold particles in the region of 50nm*50nm is determined by using the High Angle Annular Dark Field Scanning Transmission Electron Microscopy (HAADF-STEM).

In a preferred embodiment of the invention, the molar ratio of titanium and silicon in the catalyst is 0.001-0.04: 1, preferably 0.005-0.025: 1.

In a preferred embodiment of the invention, the nano-gold is contained in an amount of 0.01wt%-1wt%, preferably 0.04wt%-0.8wt%, more preferably 0.04wt%-0.5wt%, based on the total amount of said catalyst.

The third aspect of the invention provides a method for preparing a catalyst of nanogold-supported titanium silicalite molecular sieve, the method comprises the following steps: subjecting a titanium silicalite molecular sieve to an alkaline treatment with an aqueous aliphatic amine solution, and then the nano-gold particles are supported on the treated titanium silicalite molecular sieve to obtain the catalyst;

Wherein the titanium silicalite molecular sieve is the titanium silicalite molecular sieve according to the first aspect.

In a preferred embodiment of the invention, the method comprises the following steps:
(1) Mixing the titanium silicalite molecular sieve with an aqueous aliphatic amine solution, and filtering the mixture to obtain an alkali treated titanium silicalite molecular sieve;
(2) Blending the alkali treated titanium silicalite molecular sieve with an aqueous gold-containing compound solution, and adjusting pH of the obtained mixture to the range of 7-9 to obtain a turbid liquid;
(3) Filtering the turbid liquid, and activating the obtained filter residue to obtain the catalyst;
Wherein the titanium silicalite molecular sieve is the titanium silicalite molecular sieve according to the first aspect.

In a preferred embodiment of the invention, the aliphatic amine in step (1) is at least one selected from ethylamine, n-propylamine, ethylenediamine, n-butylamine, di-n-propylamine, butanediamine, and hexanediamine.

In a preferred embodiment of the invention, in step (1), the titanium silicalite molecular sieve is calculated in terms of SiO₂, a molar ratio of the titanium silicalite molecular sieve to the aliphatic amine in the aqueous aliphatic amine solution, and water in the aqueous aliphatic amine solution is 1: (0.01-1): 2-20.

In a preferred embodiment of the invention, said mixing in step (1) is performed at a temperature range of 80-250°C for the time of 10-120 min.

In the invention, an alkaline treatment of the titanium silicalite molecular sieve by an aqueous aliphatic amine solution will result in a large amount of hydroxyl defect in the titanium silicalite molecular sieve, which facilitates the uniform anchoring of more nano-gold particles onto the titanium silicalite molecular sieve. On the one hand, it promotes the dispersion of nano-gold particles onto the titanium silicalite molecular sieve, which effectively improves the synthesis efficiency of an oxidant in the hydro-oxidation reaction, and ultimately enhances the reaction effect. In the other hand, the nano-gold particles are uniformly subjected to the electronic induction effect by framework titanium atoms on the molecular sieve, the nano-gold particles are prone to convert to zero valence during the activation process, and the zero valence nano-gold can effectively catalyze the in-situ generation of H₂O₂ oxidants from hydrogen gas and oxygen gas, thereby enhancing the product selectivity.

In a preferred embodiment of the invention, the aqueous gold-containing compound solution is selected from an aqueous chloroauric acid solution.

In a preferred embodiment of the invention, the chloroauric acid aqueous solution has a concentration within the range of 0.0001-0.1M, preferably 0.0005-0.05M, and more preferably 0.005-0.05M.

In the invention, the excessively high dosage of chloroauric acid will result in the aggregation of nano-gold particles, cause side reactions during the reaction process, and reduced selectivity of the product; the excessively low dosage of chloroauric acid will cause a decreased catalytic activity of the prepared nanogold-supported titanium silicalite molecular sieve; preferably, the used amount of the aqueous chloroauric acid solution calculated in terms of gold is 0.01-5 wt%, preferably 0.1-5 wt% of the alkali treated titanium silicalite molecular sieve.

In a preferred embodiment of the invention, the pH regulator used to adjust the pH of the resulting mixture in step (2) is at least one selected from sodium hydroxide, potassium hydroxide, cesium hydroxide, urea, sodium carbonate, sodium bicarbonate, potassium carbonate, potassium bicarbonate, cesium carbonate, and cesium bicarbonate.

According to a preferred embodiment of the invention, step (2) may comprise the following operations: blending the alkali treated titanium silicalite molecular sieve with an aqueous gold-containing compound solution, adding an alkalescent pH regulator, performing a heat treatment until pH of the obtained mixture is within the range of 5-6, further adding a strongly alkaline pH regulator adjusting the pH to the range of 7-9 to obtain a turbid liquid

In the invention, given that the aqueous chloroauric acid solution has relatively strong acidity, an alkalescent pH regulator is initially added to slowly adjust the pH of the aqueous chloroauric acid solution to reduce the concentration gradient, a strongly alkaline pH regulator is then used for rapidly adjusting pH of the mixture to the desired range, the operation can prevent nano-gold particles from aggregation and growth into large particles, and avoid the side reaction catalyzed by the large nano-gold particles, thereby improving selectivity of the product.

In the invention, the heat treatment in step (2) can increase the hydrolysis rate of the weak base, avoiding the excessively low production efficiency resulting from the too-slow hydrolysis process.

In a preferred embodiment of the invention, the alkalescent pH regulator in step (2) is at least one selected from urea, sodium carbonate, sodium bicarbonate, potassium carbonate, potassium bicarbonate, cesium carbonate, and cesium bicarbonate.

In a preferred embodiment of the invention, the strongly alkaline pH regulator in step (2) is at least one selected from sodium hydroxide, potassium hydroxide, and cesium hydroxide.

In a preferred embodiment of the invention, the temperature for heat treatment in step (2) is within the range of 50-95°C.

In a preferred embodiment of the invention, the conditions of activation in step (3) comprise a temperature of 150-500°C, a time of 1-5 hours, and an activating gas is selected from a mixture of nitrogen gas and any one of oxygen gas, hydrogen gas, and propylene, or a mixture of hydrogen gas, propylene, and nitrogen gas; preferably, the activating gas is a mixture of hydrogen gas and nitrogen gas.

In the fourth aspect, the invention provides a catalyst of nanogold-supported titanium silicalite molecular sieve produced by the method according to the third aspect.

In a preferred embodiment of the invention, the catalyst comprises a carrier of titanium silicalite molecular sieve and a nano-gold supported on the carrier; wherein the catalyst has a micropore volume of 0.06-0.4 cm³/g, a micropore specific surface area of 160-450 m²/g, a mesopore volume of 0.05-0.08 cm³/g, a mesopore specific surface area of 40-85 m²/g, and a particle size of 100-250nm.

In a preferred embodiment of the invention, the catalyst has a micropore volume of 0.1-0.3 cm³/g, a micropore specific surface area of 260-410 m²/g, a mesopore volume of 0.058-0.078 cm³/g, a mesopore specific surface area of 45-80 m²/g, and a particle size of 150-210nm.

In a preferred embodiment of the invention, the catalyst satisfies: 130% < surface Ti/Si (mol%) / bulk phase Ti/Si (mol%) ×100% < 220%.

In a preferred embodiment of the invention, the catalyst satisfies: 145% < surface Ti/Si (mol%) / bulk phase Ti/Si (mol%) ×100% < 200%.

In a preferred embodiment of the invention, more than 90% of gold in the nano-gold has a valence of zero.

In a preferred embodiment of the invention, the number difference of nano-gold particles within any region of 50nm*50nm on the catalyst is not more than 30%.

In a preferred embodiment of the invention, the number of nano-gold particles within any region of 50nm*50nm on the catalyst is within the range of 5-40.

In a preferred embodiment of the invention, the nano-gold particles have a particle size within the range of 0.1-5nm.

In a preferred embodiment of the invention, the molar ratio of titanium and silicon in the catalyst is 0.001-0.04: 1, preferably 0.005-0.025: 1.

In a preferred embodiment of the invention, the nano-gold is contained in an amount of 0.01wt%-1wt%, preferably 0.04wt%-0.8wt%, more preferably 0.04wt%-0.5wt%, based on the total amount of said catalyst.

The fifth aspect of the invention provides a use of a catalyst of nanogold-supported titanium silicalite molecular sieve according to the second and fourth aspects in an olefin epoxidation reaction, a cycloolefin epoxidation reaction, a phenol hydroxylation reaction, and a cyclohexanone ammoximation reaction.

In a preferred embodiment of the invention, the olefin epoxidation reaction is a gas-phase epoxidation reaction of propylene.

In a preferred embodiment of the invention, the process that the olefin epoxidation reaction is a gas-phase epoxidation reaction of propylene comprises the following steps:
Mixing the hydrogen gas, oxygen gas, and propylene and carrying out a reaction to obtain an epoxypropane under the protection of an inert gas and in the presence of a catalyst; the catalyst is the nanogold-supported titanium silicalite molecular sieve according to the second and fourth aspects.

According to the invention, the reaction conditions preferably comprise: the volumetric flow ratio of hydrogen gas, oxygen gas, and propylene is (0.5-2):(0.5-2):1; more preferably, the volumetric flow ratio of propylene and inert gas is1:(1-10).

In some preferred embodiments of the invention, the reaction conditions further comprise a temperature of 120-220°C and a pressure of 0.1-0.5MPa.

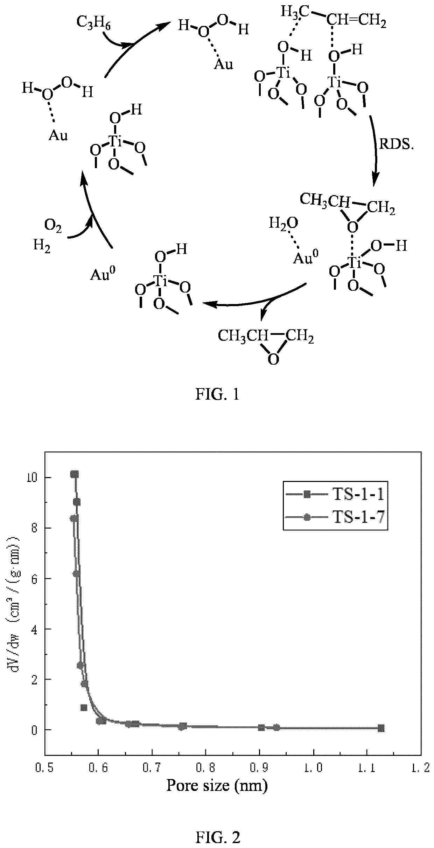

In the invention, the reaction path diagram for the gas-phase epoxidation of propylene is shown in FIG. 1. As illustrated by FIG. 1, Au catalyzes the H₂ and O₂ to generate H₂O₂, which forms the active site of Ti-OOH with TS-1. Ti-OOH catalyzes propylene to form epoxypropane.

In the invention, the process for the gas-phase epoxidation of propylene may be carried out in a continuous operation. Specifically, after the catalyst is charged into a reactor, a mixture of hydrogen gas, oxygen gas, propylene, and inert gas is continuously added to perform the reaction.

The invention does not impose specific requirements on the morphology of the catalyst, the catalyst may be nanogold-supported titanium silicalite molecular sieve powder, or further loaded on a carrier for use, it can be selected by those skilled in the art according to the kind of the reactor.

In the invention, the separation of propylene gas phase epoxidation product from the catalyst can be adjusted according to the morphology of the catalyst and the practical requirements. For example, when the catalyst is nanogold-supported titanium silicalite molecular sieve powder, the separation of the product and the recycling of said catalyst can be achieved by means of sedimentation, filtration, centrifugation, evaporation, membrane separation, and the like. When the catalyst is nanogold-supported titanium silicalite molecular sieve supported on a carrier (i.e., the formed catalyst), the formed catalyst can be packed into a fixed bed reactor, and the catalyst may be recovered after the reaction is completed.

The invention will be described in detail below with reference to examples. In the following examples, room temperature refers to 25±5°C.

Unless otherwise specified in the invention, the raw materials used in the examples below are chemically pure reagents.

In the following Examples and Comparative Examples, the micropore specific surface area and micropore volume were determined by analyzing and calculating with the t-plot method after measuring the static N₂ adsorption-desorption curve of the sample by using a static nitrogen adsorption instrument with a model Micro meritics ASAP 2460 under the liquid nitrogen temperature.

The mesopore specific surface area and mesopore volume of the catalyst were determined by analyzing and calculating with the BJH method after measuring the static N₂ adsorption-desorption curve of the sample by using a static nitrogen adsorption instrument with a model Micro meritics ASAP 2460 under the liquid nitrogen temperature.

The total specific surface area was tested and obtained by using the BET method;
The pore size distribution map was calculated and obtained from the BJH formula;
The micropore pore size distribution map was calculated by using the t-plot method;
The particle size was observed and measured by the High Angle Annular Dark Field Scanning Transmission Electron Microscopy (HAADF-STEM);
The titanium content and the silicon content on the surface were measured by using the X-ray Photoelectron Spectroscopy (XPS);
The titanium content and silicon content of the bulk phase of the catalyst were measured by using the X-ray Fluorescence Spectroscopy (XRF);
The nano-gold valence was measured by using X-ray Photoelectron Spectroscopy (XPS), the measured XPS peak was divided by the software to obtain the small peaks corresponding to the Au valence 0, +1, and +3, respectively, and the content of the valence 0 nano-gold in the nano-gold was obtained by calculating the proportion of the peak area corresponding to the valence 0 to the total peak area;
The number of nano-gold particles in the region of 50nm*50nm on the titanium silicalite molecular sieve was measured by using the High Angle Annular Dark Field Scanning Transmission Electron Microscopy (HAADF-STEM).

In the following Preparation Examples, the specific chemical structural formulas of the silylating reagent used herein were shown in Table 1, wherein the respective substituents and parameters corresponding to formula (I) were shown in Table 1. Each of the compounds 1-6 was commercially available.

**Table 1**

| | Compound (1) | Compound (2) | Compound (3) |
|---|---|---|---|
| i | 2 | 1 | 4 |
| R₁ | Ethyl | Methyl | n-propyl |
| R₂ | Ethyl | Methyl | n-propyl |
| R₃ | Ethyl | Methyl | n-propyl |
| R₄ | Hydrogen | Hydrogen | Hydrogen |
| R₅ | Hydrogen | Methyl | Hydrogen |
| R₆ | Methyl | Methyl | -SH |
| Chemical structural formulas | 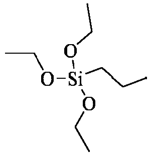 | 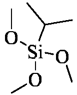 | 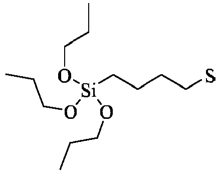 |

**Table 1 (continued)**

| | Compound (4) | Compound (5) | Compound (6) |
|---|---|---|---|
| i | 1 | 1 | 4 |
| R₁ | Ethyl | Methyl | Methyl |
| R₂ | Methyl | Methyl | Methyl |
| R₃ | n-propyl | Methyl | Methyl |
| R₄ | Hydrogen | Hydrogen | Hydrogen |
| R₅ | Methyl | Methyl | Hydrogen |
| R₆ | -SH | -NHR₇, R₇ is ethyl | -NHR₇, R₇ is methyl |
| Chemical structural formulas | 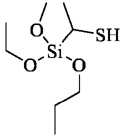 | 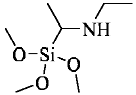 | 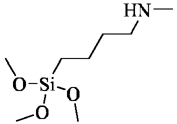 |

Preparation Examples 1-9 were used to illustrate the preparation process of titanium silicalite molecular sieve.

### Preparation Example 1

(1) Tetraethyl silicate, tetrapropyl ammonium hydroxide, and water were subjected to a first stirring and mixing at room temperature to obtain a mixed system, and during the stirring process, a mixed liquor of tetrabutyl titanate and isopropanol was dropwise added into the mixed system at a rate of 0.2mL/min, and a second stirring was carried out for 0.5h to obtain a mixed solution; tetraethyl silicate was calculated in terms of SiO₂, tetrapropyl ammonium hydroxide was calculated in terms of N, tetrabutyl titanate was calculated in terms of TiO₂, the molar ratio of tetraethyl silicate, tetrapropyl ammonium hydroxide, and water was 1:0.1:15; and the molar ratio of tetraethyl silicate, tetrabutyl titanate and isopropanol was 1:0.015:3;
   The mixed solution was then subjected to an alcohol removal process at 70°C for 8h to obtain a titanium silica sol;
(2) The compound (1) was added into the titanium silica sol, and a third stirring was performed at room temperature for 1.5h to obtain a mixture, wherein the molar ratio of compound (1) to tetraethyl silicate was 0.1:1;
(3) The mixture was heated to 170°C within 0.5h, and subjected to a hydrothermal crystallization at 170°C for 24h to obtain a crystallization product; the crystallization product was subjected to rinsing with water, filtering, and drying at 120°C for 2h sequentially.

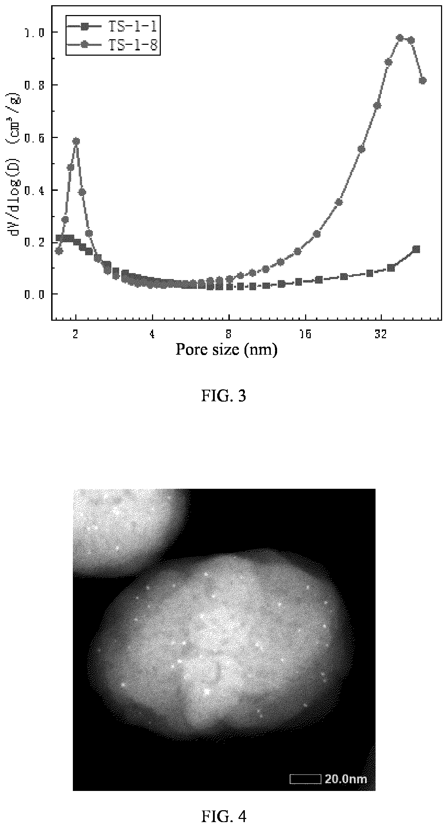

The dried product was calcined at 550°C for 6h to prepare a titanium silicalite molecular sieve TS-1-1;
The physical property parameters of the titanium silicalite molecular sieve TS-1-1 obtained in the Preparation Example were shown in Table 2. The pore size distribution of micropores and pore size distribution of titanium silicalite molecular sieve TS-1-1 were shown in FIG. 2 and FIG. 3, respectively. As can be seen in FIG. 2, the titanium silicalite molecular sieve TS-1-1 comprised a large number of micropores with a pore size of about 0.55nm; as illustrated by FIG. 3, the titanium silicalite molecular sieve TS-1-1 was substantially free of mesopore channels.

### Preparation Example 2

The titanium silicalite molecular sieve was prepared according to the same method as the Preparation Example 1, except that in step (2), compound (1) was replaced by compound (2), and the physical property parameters of the produced titanium silicalite molecular sieve TS-1-2 were shown in Table 2.

### Preparation Example 3

The titanium silicalite molecular sieve was prepared according to the same method as the Preparation Example 1, except that in step (2), compound (1) was replaced by compound (3), and the physical property parameters of the produced titanium silicalite molecular sieve TS-1-3 were shown in Table 2.

### Preparation Example 4

The titanium silicalite molecular sieve was prepared according to the same method as the Preparation Example 1, except that in step (2), the compound (1) was replaced by the compound (4), and the physical property parameters of the produced titanium silicalite molecular sieve TS-1-4 were shown in Table 2.

### Preparation Example 5

The titanium silicalite molecular sieve was prepared according to the same method as the Preparation Example 1, except that in step (2), compound (1) was replaced by compound (5), and the physical property parameters of the produced titanium silicalite molecular sieve TS-1-5 were shown in Table 2.

### Preparation Example 6

The titanium silicalite molecular sieve was prepared according to the same method as the Preparation Example 1, except that in step (2), compound (1) was replaced by compound (6), and the physical property parameters of the produced titanium silicalite molecular sieve TS-1-6 were shown in Table 2.

### Preparation Example 7

(1) Tetraethyl silicate, tetrapropyl ammonium hydroxide, and water were subjected to a first stirring and mixing at room temperature to obtain a mixed system, and during the stirring process, a mixed liquor of tetrabutyl titanate and isopropanol was dropwise added into the mixed system at a rate of 0.2mL/min, and a second stirring was carried out for 0.5h to obtain a mixed solution; tetraethyl silicate was calculated in terms of SiO₂, tetrapropyl ammonium hydroxide was calculated in terms of N, tetrabutyl titanate was calculated in terms of TiO₂, the molar ratio of tetraethyl silicate, tetrapropyl ammonium hydroxide, and water was 1:0.1:15; and the molar ratio of tetraethyl silicate, tetrabutyl titanate and isopropanol was 1:0.015:3;
   The mixed solution was then subjected to an alcohol removal process at 70°C for 8h to obtain a titanium silica sol;
(2) The mixture was heated to 170°C at a temperature rise rate of 1°C/min, and subjected to a hydrothermal crystallization at 170°C for 72h to obtain a crystallization product; the crystallization product was subjected to rinsing with water, filtering, and drying at 120°C for 2h sequentially.

The dried product was calcined at 550°C for 6h to prepare a titanium silicalite molecular sieve TS-1-7;

The physical property parameters of the titanium silicalite molecular sieve TS-1-7 obtained in the Preparation Example were shown in Table 2. The pore size distribution of titanium silicalite molecular sieve TS-1-7 was shown in FIG. 2. As can be seen in FIG. 2, the titanium silicalite molecular sieve TS-1-7 obtained without adding the silylating reagent of the invention also comprised the micropore channels with a pore size of about 0.55nm, but its micropore content is significantly lower than that of the titanium silicalite molecular sieve TS-1-1.

### Preparation Example 8

(1) 31.0g of tetraethyl silicate, 1.8g of tetrabutyl titanate, and 15g of tetrapropyl ammonium hydroxide solution (with a mass concentration of 24.4%) were mixed, 25g of deionized water was then added under the stirring condition, the mixture was hydrolyzed at the temperature of 80°C, and subjected to an alcohol removal process for 4 hours while supplemented with the evaporated water to obtain a yellowish transparent aqueous solution;
(2) The product obtained in step (1) was charged into a stainless steel closed reaction kettle, and allowed to stand still at 80°C for 24 hours to obtain a pre-crystallization product; 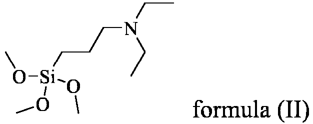
2.0g of the compound represented by formula (II) was added to the pre-crystallization product, and stirred at room temperature for 2 hours to form a transparent viscous liquid, the liquid was transferred to the stainless steel closed reaction kettle, preserved at a constant temperature of 90°C for 12 hours, then slowly heated to 165°C at the temperature rise rate of 1°C/min and preserved the constant temperature at 165°C for 2 days, the reaction product was then filtered, washed, and dried at 120°C for 12 hours, further calcined at 550°C for 6 hours to prepare a titanium silicalite molecular sieve TS-1-8;

The physical property parameters of the titanium silicalite molecular sieve TS-1-8 obtained in the Preparation Example were shown in Table 2, and the pore size distribution diagram of the titanium silicalite molecular sieve TS-1-8 were shown in FIG. 3; as can be seen from FIG. 3, the titanium silicalite molecular sieve TS-1-8 contained micropore channels with a pore size of 2nm and abundant mesopore channels with a pore size of about 38nm. Therefore, although its micropore specific surface area was not low, the ratio of micropore specific surface area to the total specific surface area was low.

### Preparation Example 9

(1) 31.0g of tetraethyl silicate, 1.8g of tetrabutyl titanate, and 15g of tetrapropyl ammonium hydroxide solution (with a mass concentration of 24.4%) were mixed, 25g of deionized water was then added under the stirring condition, the mixture was hydrolyzed at the temperature of 80°C, and subjected to an alcohol removal process for 4 hours while supplemented with the evaporated water to obtain a yellowish transparent aqueous solution;
(2) The product obtained in step (1) was charged into a stainless steel closed reaction kettle, and allowed to stand still at 80°C for 24 hours to obtain a pre-crystallization product;

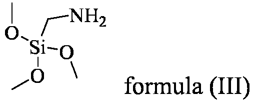

2.0g of the compound represented by formula (III) was added to the pre-crystallization product and stirred at room temperature for 2 hours to form a transparent viscous liquid, the liquid was transferred to the stainless steel closed reaction kettle, preserved at a constant temperature of 90°C for 12 hours, then slowly heated to 165°C at the temperature rise rate of 1°C/min and preserved the constant temperature at 165°C for 2 days, the reaction product was then filtered, washed, and dried at 120°C for 12 hours, further calcined at 550°C for 6 hours to prepare a titanium silicalite molecular sieve TS-1-9;
The physical property parameters of the titanium silicalite molecular sieve TS-1-9 obtained in the Preparation Example were shown in Table 2

**Table 2**

| | Preparation Example 1 | Preparation Example 2 | Preparation Example 3 | Preparation Example 4 |
|---|---|---|---|---|
| titanium silicalite molecular sieve | TS-1-1 | TS-1-2 | TS-1-3 | TS-1-4 |
| Micropore specific surface area (m²/g) | 355.2 | 367.6 | 446.4 | 471.8 |
| Micropore volume (cm³/g) | 0.178 | 0.182 | 0.355 | 0.362 |
| The ratio of micropore specific surface area to the total specific surface area (%) | 61.2 | 63.2 | 85.5 | 83.8 |
| Mesopore specific surface area (m²/g) | 71.2 | 77.8 | 89.7 | 85.5 |
| Mesopore volume (cm³/g) | 0.082 | 0.085 | 0.099 | 0.098 |
| Particle size (nm) | 185 | 180 | 152 | 163 |
| Surface Ti/Si(mol%) / bulk phase Ti/Si(mol%)×100% | 152.1 | 185.1 | 171.5 | 168.2 |
| Molar ratio of silicon/titanium | 1: 0.015 | 1: 0.015 | 1: 0.015 | 1: 0.015 |

**Table 2 (continued)**

| | Preparation Example 5 | Preparation Example 6 | Preparation Example 7 | Preparation Example 8 | Preparation Example 9 |
|---|---|---|---|---|---|
| titanium silicalite molecular sieve | TS-1-5 | TS-1-6 | TS-1-7 | TS-1-8 | TS-1-9 |
| Micropore specific surface area (m²/g) | 425.3 | 409.7 | 274.9 | 297.5 | 233.9 |
| Micropore volume (cm³/g) | 0.283 | 0.221 | 0.113 | 0.170 | 0.169 |
| The ratio of micropore specific surface area to the total specific surface area (%) | 78.1 | 73.2 | 54.3 | 26.3 | 50.3 |
| Mesopore specific surface area (m²/g) | 94.3 | 98.1 | 81.2 | 177.1 | 151.6 |
| Mesopore volume (cm³/g) | 0.097 | 0.095 | 0.127 | 0.203 | 0.132 |
| Particle size (nm) | 190 | 210 | 140 | 300 | 310 |
| Surface Ti/Si(mol%) / bulk phase Ti/Si(mol%)×100% | 145.6 | 169.3 | 113.6 | 94.6 | 89.3 |
| Molar ratio of silicon/titanium | 1: 0.015 | 1: 0.015 | 1: 0.015 | 1: 0.035 | 1: 0.035 |

### Example 1

(1) The titanium silicalite molecular sieve TS-1-1 was mixed with an ethylamine aqueous solution and then subjected to a high-temperature treatment to obtain a first turbid liquid, which was filtered to obtain an alkaline post-treated titanium silicalite molecular sieve; the titanium silicalite molecular sieve was calculated in terms of SiO₂, the molar ratio of the titanium silicalite molecular sieve to the ethylamine in said ethylamine aqueous solution to water in said ethylamine aqueous solution was 1: 0.5: 10; the temperature of the high-temperature treatment was 120°C, and the time was 60 min;
(2) 5g of alkaline post-treated titanium silicalite molecular sieve TS-1-1 was blended with 100mL of aqueous solution (having a concentration of 0.01M) of chloroauric acid (HAuCl₄), NaOH was added, and a pH of the mixture was adjusted to 8 to obtain a second turbid liquid;
(3) The second turbid liquid was filtered, and the obtained filter residue was activated to prepare a nanogold-supported titanium silicalite molecular sieve catalyst Au/TS - 1 - 1;

Wherein the activation conditions included: the temperature was 200°C, the time was 3h, and the activating gas was a mixed gas of hydrogen gas and nitrogen gas (with a volume ratio of 1: 7);
The physical property parameters of the nanogold-supported titanium silicalite molecular sieve catalyst Au/TS-1-1 were shown in Table 3.

### Example 2

The catalyst was prepared according to the same method as that of Example 1, except that titanium silicalite molecular sieve TS-1-1 in step (1) was replaced with titanium silicalite molecular sieve TS-1-2 to obtain a nanogold-supported titanium silicalite molecular sieve catalyst Au/TS-1-2, and the physical property parameters of said nanogold-supported titanium silicalite molecular sieve Au/TS-1-2 were shown in Table 3.

### Example 3

The catalyst was prepared according to the same method as that of Example 1, except that titanium silicalite molecular sieve TS-1-1 in step (1) was replaced with titanium silicalite molecular sieve TS-1-3 to obtain a nanogold-supported titanium silicalite molecular sieve catalyst Au/TS-1-3, and the physical property parameters of said nanogold-supported titanium silicalite molecular sieve Au/TS-1-3 were shown in Table 3, the HAADF-STEM photograph of the catalyst Au/TS-1-3 was shown in FIG. 4, as illustrated in FIG. 4, the Au nanoparticles on the Au/TS-1-3 have uniform particle size (about 2.4nm) and were uniformly dispersed on the titanium silicalite molecular sieve TS-1-3.

### Example 4

The catalyst was prepared according to the same method as that of Example 1, except that titanium silicalite molecular sieve TS-1-1 in step (1) was replaced with titanium silicalite molecular sieve TS-1-4 to obtain a nanogold-supported titanium silicalite molecular sieve catalyst Au/TS-1-4, and the physical property parameters of said nanogold-supported titanium silicalite molecular sieve Au/TS-1-4 were shown in Table 3.

### Example 5

The catalyst was prepared according to the same method as that of Example 1, except that titanium silicalite molecular sieve TS-1-1 in step (1) was replaced with titanium silicalite molecular sieve TS-1-5 to obtain a nanogold-supported titanium silicalite molecular sieve catalyst Au/TS-1-5, and the physical property parameters of said nanogold-supported titanium silicalite molecular sieve Au/TS-1-5 were shown in Table 3.

### Example 6

The catalyst was prepared according to the same method as that of Example 1, except that titanium silicalite molecular sieve TS-1-1 in step (1) was replaced with titanium silicalite molecular sieve TS-1-6 to obtain a nanogold-supported titanium silicalite molecular sieve catalyst Au/TS-1-6, and the physical property parameters of said nanogold-supported titanium silicalite molecular sieve Au/TS-1-6 were shown in Table 3.

### Example 7

The catalyst was prepared according to the same method as that of Example 1, except that step (2) was changed to the following operations: 5g of alkaline post-treated titanium silicalite molecular sieve TS-1-1 was blended with 100mL of aqueous solution (having a concentration of 0.01M) of chloroauric acid (HAuCl₄), urea was added, the heat treatment was performed at 70°C until a pH of the mixture was 6, NaOH was further added, and a pH of the mixture was adjusted to 8 to obtain a second turbid liquid; a nanogold-supported titanium silicalite molecular sieve catalyst Au/TS-1-1-1 was prepared, the physical property parameters of the nanogold-supported titanium silicalite molecular sieve catalyst Au/TS-1-1-1 were shown in Table 3.

### Example 8

The catalyst was prepared according to the same method as that of Example 3, except that step (2) was changed to the following operations: 5g of alkaline post-treated titanium silicalite molecular sieve TS-1-3 was blended with 100mL of aqueous solution (having a concentration of 0.01M) of chloroauric acid (HAuCl₄), urea was added, the heat treatment was performed at 70°C until a pH of the mixture was 6, NaOH was further added, and a pH of the mixture was adjusted to 8 to obtain a second turbid liquid; a nanogold-supported titanium silicalite molecular sieve catalyst Au/TS-1-3-1 was prepared, the physical property parameters of the nanogold-supported titanium silicalite molecular sieve catalyst Au/TS-1-3-1 were shown in Table 3.

### Example 9

The catalyst was prepared according to the same method as that of Example 1, except that the alkaline post-treatment process of step (1) was omitted, 5g of alkaline post-treated titanium silicalite molecular sieve TS-1-1 was blended with 100mL of aqueous solution (having a concentration of 0.01M) of chloroauric acid (HAuCl₄), NaOH was added, and a pH of the mixture was adjusted to 8 to obtain a second turbid liquid;
The second turbid liquid was filtered, and the obtained filter residue was activated to prepare a nanogold-supported titanium silicalite molecular sieve catalyst Au/TS-1-1-2;
The physical property parameters of the nanogold-supported titanium silicalite molecular sieve catalyst Au/TS-1-1-2 were shown in Table 3.

### Example 10

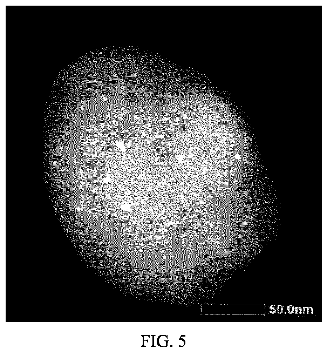

The catalyst was prepared according to the same method as that of Example 3, except that the alkaline post-treatment process of step (1) was omitted, 5g of alkaline post-treated titanium silicalite molecular sieve TS-1-3 was blended with 100mL of aqueous solution (having a concentration of 0.01M) of chloroauric acid (HAuCl₄), NaOH was added, and a pH of the mixture was adjusted to 8 to obtain a second turbid liquid;
The second turbid liquid was filtered, and the obtained filter residue was activated to prepare a nanogold-supported titanium silicalite molecular sieve catalyst Au/TS-1-3-2;
The physical property parameters of the nanogold-supported titanium silicalite molecular sieve catalyst Au/TS-1-3-2 were shown in Table 3, the HAADF-STEM photograph of the catalyst Au/TS-1-3-2 was shown in FIG. 5, as illustrated in FIG. 5, the Au nanoparticles were slightly larger (about 3.8nm), and were unevenly distributed on the titanium silicalite molecular sieve TS-1-3-2.

### Example 11

The catalyst was prepared according to the same method as that of Example 5, except that the alkaline post-treatment process of step (1) was omitted, 5g of alkaline post-treated titanium silicalite molecular sieve TS-1-5 was blended with 100mL of aqueous solution (having a concentration of 0.01M) of chloroauric acid (HAuCl₄), NaOH was added, and a pH of the mixture was adjusted to 8 to obtain a second turbid liquid;
The second turbid liquid was filtered, and the obtained filter residue was activated to prepare a nanogold-supported titanium silicalite molecular sieve catalyst Au/TS-1-5-1;
The physical property parameters of the nanogold-supported titanium silicalite molecular sieve catalyst Au/TS-1-5-1 were shown in Table 3.

### Comparative Example 1

The catalyst was prepared according to the same method as that of Example 1, except that titanium silicalite molecular sieve TS-1-1 in step (1) was replaced with titanium silicalite molecular sieve TS-1-7 to obtain a nanogold-supported titanium silicalite molecular sieve catalyst Au/TS-1-7, and the physical property parameters of said nanogold-supported titanium silicalite molecular sieve Au/TS-1-7 were shown in Table 3.

### Comparative Example 2

The catalyst was prepared according to the same method as that of Example 1, except that titanium silicalite molecular sieve TS-1-1 in step (1) was replaced with titanium silicalite molecular sieve TS-1-8 to obtain a nanogold-supported titanium silicalite molecular sieve catalyst Au/TS-1-8, and the physical property parameters of said nanogold-supported titanium silicalite molecular sieve Au/TS-1-8 were shown in Table 3.

### Comparative Example 3

The catalyst was prepared according to the same method as that of Example 1, except that titanium silicalite molecular sieve TS-1-1 in step (1) was replaced with titanium silicalite molecular sieve TS-1-9 to obtain a nanogold-supported titanium silicalite molecular sieve catalyst Au/TS-1-9, and the physical property parameters of said nanogold-supported titanium silicalite molecular sieve Au/TS-1-9 were shown in Table 3.

**Table 3**

| | Catalyst | Au conten t (wt%) | Molar ratio of silicon/titaniu m | Micropor e volume (cm³/g) | Particl e size (nm) | Micropor e specific surface area (m²/g) | Mesopor e volume (cm³/g) |
|---|---|---|---|---|---|---|---|
| Example 1 | Au/TS-1-1 | 0.23 | 1: 0.015 | 0.125 | 185 | 286.4 | 0.061 |
| Example 2 | Au/TS-1-2 | 0.21 | 1: 0.015 | 0.139 | 180 | 306.3 | 0.063 |
| Example 3 | Au/TS-1-3 | 0.22 | 1: 0.015 | 0.282 | 152 | 382.6 | 0.078 |
| Example 4 | Au/TS-1-4 | 0.21 | 1: 0.015 | 0.295 | 163 | 401.5 | 0.072 |
| Example 5 | Au/TS-1-5 | 0.21 | 1: 0.015 | 0.231 | 190 | 352.1 | 0.076 |
| Example 6 | Au/TS-1-6 | 0.23 | 1: 0.015 | 0.177 | 210 | 342.9 | 0.074 |
| Example 7 | Au/TS-1-1-1 | 0.25 | 1: 0.015 | 0.119 | 185 | 262.1 | 0.058 |
| Example 8 | Au/TS-1-3-1 | 0.26 | 1: 0.015 | 0.273 | 152 | 356.2 | 0.071 |
| Example 9 | Au/TS-1-1-2 | 0.18 | 1: 0.015 | 0.094 | 211 | 179 | 0.055 |
| Example 10 | Au/TS-1-3-2 | 0.18 | 1: 0.015 | 0.332 | 149 | 426 | 0.057 |
| Example 11 | Au/TS-1-5-1 | 0.17 | 1: 0.015 | 0.305 | 212 | 412 | 0.079 |
| Comparativ e Example 1 | Au/TS-1-7 | 0.20 | 1: 0.015 | 0.066 | 140 | 201.3 | 0.103 |
| Comparativ e Example 2 | Au/TS-1-8 | 0.21 | 1: 0.035 | 0.116 | 300 | 236.2 | 0.168 |
| Comparativ e Example 3 | Au/TS-1-9 | 0.20 | 1: 0.035 | 0.112 | 310 | 176.9 | 0.099 |

**Table 3 (continued)**

| | Catalyst | Mesopore specific surface area (m²/g) | Surface Ti/Si(mol%) / bulk phase Ti/Si(mol%)×100% | Content of Au with valence 0 (%) | The average particle size of Au (nm) | Number of Au particles¹ | Number difference of Au particles ² (%) |
|---|---|---|---|---|---|---|---|
| Example 1 | Au/TS-1-1 | 55.3 | 152.1 | 91 | 2.3 | 14-16 | 12.5 |
| Example 2 | Au/TS-1-2 | 55.6 | 185.1 | 92 | 2.2 | 15-18 | 16.7 |
| Example 3 | Au/TS-1-3 | 68.7 | 171.5 | 91 | 2.4 | 13-16 | 18.7 |
| Example 4 | Au/TS-1-4 | 66.5 | 168.2 | 93 | 2.2 | 14-17 | 17.6 |
| Example 5 | Au/TS-1-5 | 78.2 | 145.6 | 92 | 2.2 | 12-15 | 20 |
| Example 6 | Au/TS-1-6 | 76.5 | 169.3 | 91 | 2.3 | 13-15 | 13.3 |
| Example 7 | Au/TS-1-1-1 | 48.2 | 152.1 | 94 | 1.8 | 15-18 | 16.7 |
| Example 8 | Au/TS-1-3-1 | 55.1 | 171.5 | 95 | 1.7 | 15-19 | 21 |
| Example 9 | Au/TS-1-1-2 | 42.5 | 136.1 | 90 | 2.1 | 13-15 | 13.3 |
| Example 10 | Au/TS-1-3-2 | 44.2 | 142.5 | 91 | 2.2 | 14-17 | 17.6 |
| Example 11 | Au/TS-1-5-1 | 80.1 | 144.6 | 90 | 2.2 | 14-16 | 12.5 |
| Comparative Example 1 | Au/TS-1-7 | 59.6 | 113.6 | 91 | 3.1 | 10-13 | 23.1 |
| Comparative Example 2 | Au/TS-1-8 | 134.9 | 94.6 | 91 | 2.8 | 11-13 | 15.4 |
| Comparative Example 3 | Au/TS-1-9 | 107.8 | 89.3 | 91 | 2.7 | 12-14 | 14.3 |

| | | | | | | | |
|---|---|---|---|---|---|---|---|
| Note: 1 - in a HAADF-STEM photograph of a single nanogold-supported titanium silicalite molecular sieve particle, the nanogold-supported titanium silicalite molecular sieve was divided into several (not less than 3) adjacent regions of 50nm*50nm, the number of Au particles in each region of 50nm*50nm was calculated to obtain the number range of the Au particles. 2 - in a HAADF-STEM photograph of a single nanogold-supported titanium silicalite molecular sieve particle, the nanogold-supported titanium silicalite molecular sieve was divided into several (not less than 3) adjacent regions of 50nm*50nm, and the number of Au particles in each region of 50nm*50nm was calculated, wherein the region with the highest number of Au particles was denoted as A1 region, the region with the lowest number of Au particles was denoted as A2 region, the number difference of Au particles = (number of Au particles in A1 region - number of Au particles in A2 region) / number of Au particles in A1 region. | | | | | | | |

### Test Examples

The nanogold-supported titanium silicalite molecular sieves prepared in Examples 1-11 and the Comparative Examples 1-3 were respectively used as a catalyst, which was loaded into a tubular reactor with an inner diameter of 8mm, then heated to 180°C in the N₂ atmosphere, the hydrogen gas, oxygen gas, and propylene were introduced for starting the reaction, and after reaction for 1h, an on-line analysis on the product was performed; wherein the dosage of catalyst was 0.4g, the flow rate, reaction temperature and pressure of each gas were shown in Table 4, and the catalytic reaction results were shown in Table 5.

In the invention, the analysis of the reactants and products in the evaluation system was carried out by using gas chromatography. Wherein the analysis conditions of the gas chromatography were as follows: agilent-6890 type chromatograph, molecular sieve 5A and PoraBONDU chromatographic column, FID and TCD detectors. Conversion rate of propylene % = (mole number of propylene in raw materials - mole number of propylene in product) / mole number of propylene in raw materials × 100% Epoxypropane selectivity % - mole number of epoxypropane in product / (mole number of propylene in raw materials - mole number of propylene in product) × 100%

**Table 4**

| | Catalysts | Inert gas | Flow rate mL/min | | | | Pressur e/MPa | Temp erature /°C |
|---|---|---|---|---|---|---|---|---|
| | | | Hydrog en gas | Oxygen gas | propyl ene | Inert gas | | |
| Test Example 1 | Au/TS-1-1 | Nitrogen gas | 2 | 2 | 2 | 14 | 0.1 | 180 |
| Test Example 2 | Au/TS-1-2 | Nitrogen gas | 2 | 2 | 2 | 14 | 0.1 | 180 |
| Test | Au/TS-1-3 | Nitrogen | 2 | 2 | 2 | 14 | 0.1 | 180 |
| Example 3 | | gas | | | | | | |
| Test Example 4 | Au/TS-1-4 | Nitrogen gas | 2 | 2 | 2 | 14 | 0.1 | 180 |
| Test Example 5 | Au/TS-1-5 | Argon gas | 2 | 2 | 2 | 14 | 0.1 | 180 |
| Test Example 6 | Au/TS-1-6 | Helium gas | 2 | 2 | 2 | 14 | 0.1 | 180 |
| Test Example 7 | Au/TS-1-1-1 | Nitrogen gas | 2 | 2 | 2 | 14 | 0.1 | 180 |
| Test Example 8 | Au/TS-1-3-1 | Nitrogen gas | 2 | 2 | 2 | 14 | 0.1 | 180 |
| Test Example 9 | Au/TS-1-1-2 | Nitrogen gas | 2 | 2 | 2 | 14 | 0.1 | 180 |
| Test Example 10 | Au/TS-1-3-2 | Nitrogen gas | 2 | 2 | 2 | 14 | 0.1 | 180 |
| Test Example 11 | Au/TS-1-5-1 | Nitrogen gas | 2 | 2 | 2 | 14 | 0.1 | 180 |
| Test Example 12 | Au/TS-1-7 | Nitrogen gas | 2 | 2 | 2 | 14 | 0.1 | 180 |
| Test Example 13 | Au/TS-1-8 | Nitrogen gas | 2 | 2 | 2 | 14 | 0.1 | 180 |
| Test Example 14 | Au/TS-1-9 | Nitrogen gas | 2 | 2 | 2 | 14 | 0.1 | 180 |

**Table 5**

| | The conversion rate of propylene / % | Epoxypropane selectivity / % |
|---|---|---|
| Test Example 1 | 8.9 | 92.2 |
| Test Example 2 | 9.4 | 92.4 |
| Test Example 3 | 12.3 | 93.1 |
| Test Example 4 | 12.8 | 94.6 |
| Test Example 5 | 11.5 | 92.9 |
| Test Example 6 | 10.6 | 91.8 |
| Test Example 7 | 13.6 | 97.7 |
| Test Example 8 | 13.5 | 98.5 |
| Test Example 9 | 8.2 | 91.5 |
| Test Example 10 | 8.1 | 91.2 |
| Test Example 11 | 8.4 | 90.5 |
| Test Example 12 | 4.5 | 85.1 |
| Test Example 13 | 5.3 | 88.6 |
| Test Example 14 | 6.7 | 86.3 |

As can be seen from the comparison results between Test Examples 1-11 and Test Examples 12-14, a use of the silylating reagent provided by the invention in combination with the specific crystallization conditions, the titanium silicalite molecular sieve having a larger micropore volume, micropore specific surface area, and ratio of micropore specific area to the total specific surface area can be prepared, and the obtained titanium silicalite molecular sieve has a high surface titanium content, and can improve the conversion rate of propylene and the selectivity of epoxypropane.

As indicated by the comparison results between Test Examples 1-8 and Test Examples 9-11, the alkali treatment of titanium silicalite molecular sieve before loading can improve the dispersity of Au particles and zero-valent gold content, and further improve the conversion rate of propylene and the selectivity of epoxypropane.

It is shown from the comparison results between Test Examples 1-6 and Test Examples 7-8, that the pH is adjusted step by step in the process of supporting nano-gold particles, so that the aggregation of Au particles into large particles can be desirably suppressed, thereby further improving the conversion rate of propylene and the selectivity of epoxypropane.

The above content describes in detail the preferred embodiments of the invention, but the invention is not limited thereto. A variety of simple modifications can be made in regard to the technical solutions of the invention within the scope of the technical concept of the invention, including a combination of individual technical features in any other suitable manner, such simple modifications and combinations thereof shall also be regarded as the content disclosed by the invention, each of them falls into the protection scope of the invention.

## Claims

1. A titanium silicalite molecular sieve, wherein the titanium silicalite molecular sieve has a micropore specific surface area of 320-500 m²/g, a micropore volume of 0.1-0.4 cm³/g, a mesopore specific surface area of 50-100 m²/g, a mesopore volume of 0.075-0.1 cm³/g, and a particle size of 100-250nm, the micropore specific surface area accounts for 50-90% of the total specific surface area.

2. The molecular sieve according to claim 1, wherein the titanium silicalite molecular sieve has a micropore specific surface area of 350-480 m²/g, a micropore volume of 0.13-0.37 cm³/g, a mesopore specific surface area of 70-100 m²/g, a mesopore volume of 0.08-0.1 cm³/g, and a particle size of 150-210nm, the micropore specific surface area accounts for 60-90% of the total specific surface area.

3. The molecular sieve according to claims 1 or 2, wherein the titanium silicalite molecular sieve satisfies: 130% < surface Ti/Si (mol%) / bulk phase Ti/Si (mol%) ×100% < 220%.

4. The molecular sieve according to claim 3, wherein the titanium silicalite molecular sieve satisfies: 145% < surface Ti/Si (mol%) / bulk phase Ti/Si (mol%) ×100% < 200%.

5. The molecular sieve according to any one of claims 1-4, wherein the molar ratio of titanium and silicon in the titanium silicalite molecular sieve is 0.001-0.04: 1, preferably 0.005-0.025: 1.

6. A catalyst of nanogold-supported titanium silicalite molecular sieve, wherein the catalyst comprises a carrier of titanium silicalite molecular sieve and a nano-gold supported on the carrier; wherein the catalyst has a micropore volume of 0.06-0.4 cm³/g, a micropore specific surface area of 160-450 m²/g, a mesopore volume of 0.05-0.08 cm³/g, a mesopore specific surface area of 40-85 m²/g, and a particle size of 100-250nm.

7. The catalyst according to claim 6, wherein the catalyst has a micropore volume of 0.1-0.3 cm³/g, a micropore specific surface area of 260-410 m²/g, a mesopore volume of 0.058-0.078 cm³/g, a mesopore specific surface area of 45-80 m²/g, and a particle size of 150-210nm.

8. The catalyst according to claim 6 or 7, wherein the catalyst satisfies: 130% < surface Ti/Si (mol%) / bulk phase Ti/Si (mol%) ×100% < 220%.

9. The catalyst according to claim 8, wherein the catalyst satisfies: 145% < surface Ti/Si (mol%) / bulk phase Ti/Si (mol%) ×100% < 200%.

10. The catalyst according to any one of claims 6-9, wherein more than 90% of gold in the nano-gold has a valence of zero.

11. The catalyst according to any one of claims 6-10, wherein the number difference of nano-gold particles within any region of 50nm*50nm on the catalyst is not more than 30%.

12. The catalyst according to any one of claims 6-11, wherein the number of nano-gold particles within any region of 50nm*50nm on the catalyst is within the range of 5-40;
preferably, the nano-gold particles have a particle size within the range of 0.1-5nm.

13. The catalyst according to any one of claims 6-12, wherein the molar ratio of titanium and silicon in the catalyst is 0.001-0.04: 1, preferably 0.005-0.025: 1.

14. The catalyst according to any one of claims 6-13, wherein the nano-gold is contained in an amount of 0.01wt%-1wt%, preferably 0.04wt%-0.8wt%, more preferably 0.04wt%-0.5wt%, based on the total amount of said catalyst.

15. A method for preparing a catalyst of nanogold-supported titanium silicalite molecular sieve, wherein the method comprises the following steps: subjecting a titanium silicalite molecular sieve to an alkaline treatment with an aqueous aliphatic amine solution, and then the nano-gold particles are supported on the treated titanium silicalite molecular sieve to obtain the catalyst;
wherein the titanium silicalite molecular sieve is the titanium silicalite molecular sieve according to any one of claims 1-5.

16. The method according to claim 15, wherein the method comprises the following steps:
(1) mixing the titanium silicalite molecular sieve with an aqueous aliphatic amine solution, and filtering the mixture to obtain an alkali treated titanium silicalite molecular sieve;
(2) blending the alkali treated titanium silicalite molecular sieve with an aqueous gold-containing compound solution, and adjusting the pH of the obtained mixture to the range of 7-9 to obtain a turbid liquid;
(3) filtering the turbid liquid, and activating the obtained filter residue to obtain the catalyst.

17. The method according to claim 15 or 16, wherein the aliphatic amine in step (1) is at least one selected from ethylamine, n-propylamine, ethylenediamine, n-butylamine, di-n-propylamine, butane diamine, and hexane diamine;
the titanium silicalite molecular sieve is calculated in terms of SiO₂, a molar ratio of
the titanium silicalite molecular sieve to the aliphatic amine in the aqueous aliphatic amine solution, and water in the aqueous aliphatic amine solution is 1: (0.01-1): 2-20; preferably, said mixing in step (1) is performed at a temperature range of 80-250°C for a time of 10-120 min;
preferably, the aqueous gold-containing compound solution in step (2) is selected from an aqueous chloroauric acid solution;
the chloroauric acid aqueous solution has a concentration within the range of 0.0001-0.1M, preferably 0.0005-0.05M, and more preferably 0.005-0.05M;
the used amount of the aqueous chloroauric acid solution calculated in terms of gold is 0.01-5 wt%, preferably 0.1-5 wt% of the alkali treated titanium silicalite molecular sieve.

18. The method according to any one of claims 15-17, wherein step (2) comprises the following operations: blending the alkali treated titanium silicalite molecular sieve with an aqueous gold-containing compound solution, adding an alkalescent pH regulator, performing a heat treatment until pH of the obtained mixture is within the range of 5-6, further adding a strongly alkaline pH regulator, adjusting the pH to the range of 7-9 to obtain a turbid liquid;
preferably, the temperature for heat treatment is within the range of 50-95°C.

19. A catalyst of nanogold-supported titanium silicalite molecular sieve produced by the method according to any one of claims 15-18.

20. Use of a catalyst of nanogold-supported titanium silicalite molecular sieve according to any one of claims 6-14 and 19 in an olefin epoxidation reaction, a cycloolefin epoxidation reaction, a phenol hydroxylation reaction, and a cyclohexanone ammoximation reaction;
preferably, the olefin epoxidation reaction is a gas-phase epoxidation reaction of propylene.
